# EUROPEAN PATENT SPECIFICATION

(11) **EP 1 749 965 B1**
(45) Date of publication and mention of the grant of the patent: **10.08.2011**
(21) Application number: 06118192.1
(22) Date of filing: 31.07.2006
(51) Int. Cl.: E06C 1/00, B60P 3/39, B62D 33/06

(54) **A ladder that can be extracted from an upper bed in a drivers's cab, especially the cab of an industrial or commercial vehicle, and a driver's cab equipped with said extractable ladder**
Extrahierbare Leiter aus dem Schlafbett einer Fahrerkabine, insbesondere von Nutzfahrzeugen, und Fahrerkabine mit so einer extrahierbareren Leiter
Echelle extractible d'un lit dans une cabine de conducteur, notamment de véhicule utilitaire, et cabine de conducteur avec cette échelle extractible

(30) Priority: 01.08.2005 IT MI20051506
(43) Date of publication of application: 07.02.2007
(73) Proprietor: IVECO S.p.A., 10156 Torino (IT)
(72) Inventor: Gaiotto, Giovanni, 10092 Beinasco Fraz. Borgaretto (IT); Raviola, Claudio, 10040 Rivalta Di Torino (IT)
(74) Representative: Borsano, Corrado

(56) References cited:
- WO-A-03/042484
- US-B1- 6 345 691
- US-B1- 6 622 822

## Description

The present invention relates to a ladder that can be extracted from an upper bed in a driver's cab, especially the cab of an industrial or commercial vehicle, and a driver's cab equipped with said extractable ladder.

As is known, cabs of industrial vehicles, in particular of long-distance lorries, are traditionally provided with beds located in the area behind the seats, to allow the driver or passenger to rest inside the cab.

Said beds comprise a supporting structure, possibly formed of a plurality of sections, anchored to the cab, possibly so as to enable the structure to be folded away or removed, that houses one or more mattresses resting on elastic metal net.

In the event of a bed in a position that is raised in relation to the floor of the cab, the problem arises of providing the person using the bed with a means of accessing the bed that is reliable, economical, manageable, lightweight and takes up little room, given the limited amount of space inside the cab.

A not very efficient solution of the state of the art is disclosed in WO03/042484 in which a collapsible ladder comprises a first stile, a second stile arranged substantially parallel with the first stile, and at least one rung attached hingingly to each of the stiles. The two stiles are attached hingingly to a sliderail on which the fastening points for the stiles are movable steplessly.

The purpose of the present invention is to solve the problems described above with a ladder that can be extracted from an upper bed in a driver's cab, especially the cab of an industrial or commercial vehicle.

The present invention relates to a ladder for a bed in a driver's cab, especially the cab of an industrial vehicle, having the features of claim 1.

In particular the present invention relates to a ladder that can be extracted from an upper bed in a driver's cab, especially the cab of an industrial or commercial vehicle, and a cab equipped with said extractable ladder, as described more fully in the claims, which are an integral part of this description.

The purposes and advantages of this invention will become clear from the following detailed description of a preferred embodiment and the relative alternative embodiments, and the drawings that are attached hereto, which are merely illustrative and not limitative, in which:
figure 1 illustrates a first alternative embodiment of the extractable ladder according to the invention;
figure 2 illustrates a second alternative embodiment of the extractable ladder according to the invention;
figure 3 illustrates a detail of the hinge system of the extractable ladder.

In the figures the same reference numbers are used to indicate the same parts.

In the figures number 1 indicates a bed in a position that is raised in relation to the floor of the cab 2. The bed 1 may be the upper berth in a pair of bunk-beds of which that indicated by number 3 is the lower berth. The bed 1 is normally hinged so that it can be folded up against the rear wall of the cab, when not in use, so as to take up as little room as possible in the cab.

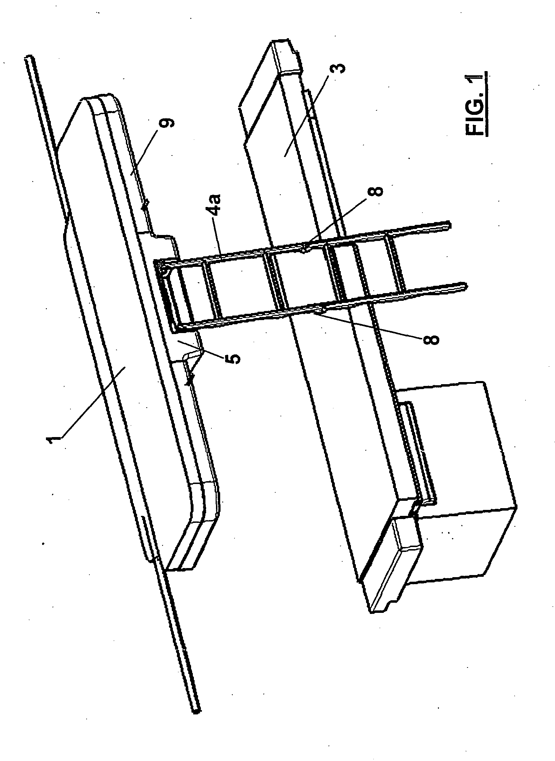

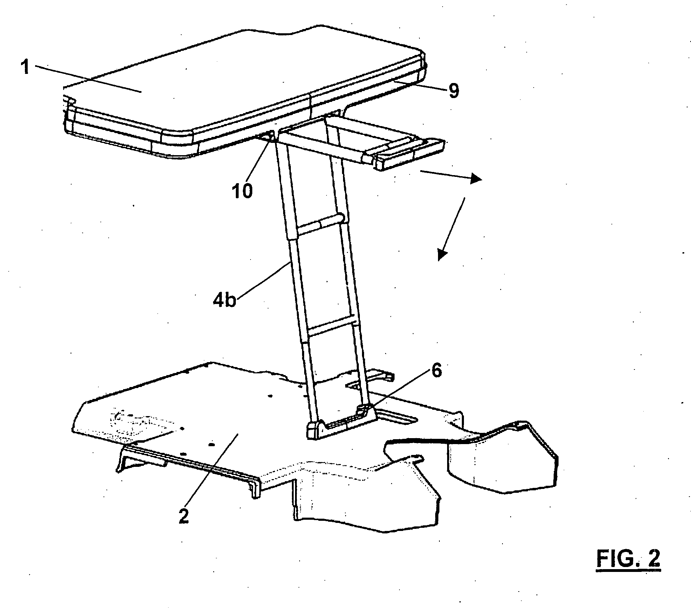

The numbers 4a in fig. 1 and 4b in fig. 2 indicate an extractable ladder according to the invention.

The ladder may be retracted into a compartment 5 arranged in the lower part of the bed, preferably integrated in the mattress frame 9 of the bed, in a central position.

The compartment 5 preferably projects beneath the lower surface of the mattress supporting frame 9. This is because the compartment 5 must not interfere with the elastic metal net supporting the mattress inside the frame, and must not affect the comfort of the person lying on the bed.

Furthermore, the compartment 5 may be in the shape of a closed shell made of rigid plastic, with rounded corners, so as to completely contain the retracted ladder when closed, and reduce the risk of injury to the people in the cab in the event of an accidental collision.

The ladder is formed of two or more parts, so as to stand on the floor 2 of the cab when fully extended, and so as to be retracted and stowed under the bed 1 inside the compartment 5 when closed. The number of parts is determined by the depth of the bed with the ladder closed and retracted, and the distance between the bed and the floor of the cab, with the ladder open.

The ladder comprises a number of steps or rungs determined by the distance between said steps or rungs and the maximum elongation when the ladder is open.

According to the first alternative embodiment shown in figure 1 the parts of the ladder 4a are joined together by means of hinges 8 that open out when the ladder is opened and fold over when closed.

According to the second alternative embodiment shown in figure 2 the parts of the ladder 4a are telescopic in that the vertical uprights slide one inside the other retractably, so that the ladder is extended when opened and shortened when closed. The ladder according to this embodiment accommodates any flexing of the bed, with the base of the ladder 6 remaining on the floor of the cab.

The end part of the ladder may comprise a base 6, which may advantageously constitute a means of shutting the ladder away inside the compartment 5 and may comprise a handle to facilitate its extraction.

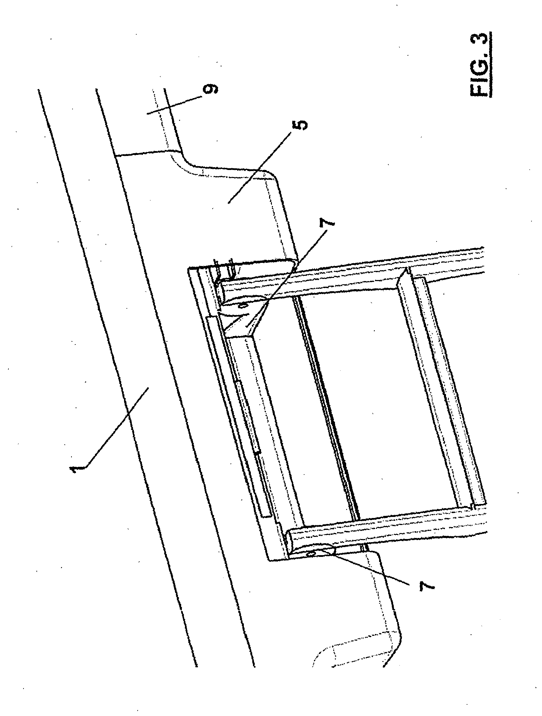

As shown in figure 3, the ladder is hinged at the top end by means of sliding hinges 7 that keep it fixed to the bed. The hinges may slide on rails mounted inside the compartment 5.

As indicated by the arrows in fig. 2, when extracted the ladder is brought forward in the retracted position, and is then opened and lowered, until it stands on the floor of the cab.

The ladder may be made of a lightweight metal, such as aluminium.

It will be apparent to the person skilled in the art that other alternative and equivalent embodiments of the invention can be conceived and reduced to practice without departing from the true spirit of the invention, as defined by the appended claims.

For example the closed compartment 5 may be replaced by an open structure 10 comprising guide and supporting rails arranged beneath the frame 9, into which the ladder is inserted and extracted so that it remains visible under the bed.

From the description set forth above it will be possible for the person skilled in the art to embody the invention without introducing any further construction details.

## Claims

1. Ladder and bed in a driver's cab, especially the cab of an industrial, vehicle, said bed (1) being in a position that is raised in relation to the floor (2) of the cab, the ladder being formed of a number of parts, and being retractable into a compartment (5;10) arranged in the lower part of the bed, from which it can be extracted,
**characterized in that** it comprises a base (6) on the end part, that enables a user to shut said ladder away inside said compartment (5;10), so as to completely contain the retracted ladder when closed.

2. Ladder and bed in a driver's cab according to claim 1, **characterized in that** said number of parts is determined by the depth of the bed, when the ladder is retracted, and the distance between the bed and the floor of the cab, with the ladder open, so that said ladder can stand on the floor (2) of the cab when fully opened, and can be retracted and stowed away under said bed (1) when closed.

3. Ladder and bed in a driver's cab according to claim 1, **characterized in that** said number of parts are joined together by means of hinges (8).

4. Ladder and bed in a driver's cab according to claim 1, **characterized in that** said number of parts are telescopic, so as to slide one inside another retractably.

5. Ladder and bed in a driver's cab according to claim 1, **characterized in that** said compartment (5) is integrated in a mattress frame (9) of the bed, in a central position.

6. Ladder and bed in a driver's cab according to claim 3, **characterized in that** said compartment (5) projects beneath the lower surface of said supporting frame (9).

7. Ladder and bed in a driver's cab according to claim 5, **characterized in that** said compartment (5) is in the shape of a closed shell made of rigid plastic, with rounded corners.

8. Ladder and bed in a driver's cab according to claim 5, **characterized in that** said ladder it is hinged at the top end thereof by means of sliding hinges (7) that keep it fixed to said bed, said sliding hinges (7) being arranged in said compartment (5).

9. Ladder and bed in a driver's cab according to claim 1, **characterized in that** said ladder it is made of lightweight metal, for example aluminum.

10. A driver's cab, especially of an industrial vehicle, equipped with a ladder and bed according to any of the previous claims.

## Patentansprüche

1. Leiter und Bett in einem Fahrerhaus, insbesondere dem Haus eines industriellen Fahrzeugs, wobei sich das Bett (1) an einer Position befindet, die in Bezug auf den Boden (2) des Hauses erhöht ist, wobei die Leiter aus einer Anzahl von Teilen ausgebildet ist und in ein in dem unteren Teil des Betts angeordnetes Fach (5; 10) eingeklappt werden kann, aus dem sie herausgezogen werden kann,
**dadurch gekennzeichnet, dass** sie eine Basis (6) an dem Endteil umfasst, die einem Benutzer ermöglicht, die Leiter in dem Fach (5; 10) wegzuschließen, sodass die eingeklappte Leiter, wenn sie verschlossen ist, vollständig enthalten ist.

2. Leiter und Bett in einem Fahrerhaus nach Anspruch 1,
**dadurch gekennzeichnet, dass** die Anzahl von Teilen durch die Tiefe des Betts, wenn die Leiter eingeklappt ist, und die Distanz zwischen dem Bett und dem Boden des Hauses, wenn die Leiter geöffnet ist, bestimmt ist, sodass die Leiter auf dem Boden (2) des Hauses stehen kann, wenn sie vollständig geöffnet ist, und eingeklappt und unter dem Bett (1) verstaut sein kann, wenn sie verschlossen ist.

3. Leiter und Bett in einem Fahrerhaus nach Anspruch 1,
**dadurch gekennzeichnet, dass** die Anzahl von Teilen mittels Gelenken (8) miteinander verbunden ist.

4. Leiter und Bett in einem Fahrerhaus nach Anspruch 1,
**dadurch gekennzeichnet, dass** die Anzahl von Teilen teleskopisch ist, um einklappbar ineinander verschoben zu werden.

5. Leiter und Bett in einem Fahrerhaus nach Anspruch 1,
**dadurch gekennzeichnet, dass** das Fach (5) an einer mittleren Position in einem Matratzenrahmen (9) des Betts integriert ist.

6. Leiter und Bett in einem Fahrerhaus nach Anspruch 3,
**dadurch gekennzeichnet, dass** das Fach (5) unter der Unterseite des tragenden Rahmens (9) vorsteht.

7. Leiter und Bett in einem Fahrerhaus nach Anspruch 5,
**dadurch gekennzeichnet, dass** das Fach (5) die Form eines geschlossenen Gehäuses aus hartem Kunststoff mit abgerundeten Ecken aufweist.

8. Leiter und Bett in einem Fahrerhaus nach Anspruch 5,
**dadurch gekennzeichnet, dass** die Leiter an ihrem oberen Ende mittels verschiebbarer Gelenke (7) angelenkt ist, die sie an dem Bett festhalten, wobei die verschiebbaren Gelenke (7) in dem Fach (5) angeordnet sind.

9. Leiter und Bett in einem Fahrerhaus nach Anspruch 1,
**dadurch gekennzeichnet, dass** die Leiter aus leichtem Material, beispielsweise Aluminium, hergestellt ist.

10. Fahrerhaus, insbesondere eines industriellen Fahrzeugs, das mit einer Leiter und einem Bett nach einem der vorherigen Ansprüche ausgestattet ist.

## Revendications

1. Echelle et lit dans une cabine de conducteur, notamment la cabine d'un véhicule industriel, ledit lit (1) étant dans une position qui est élevée par rapport au sol (2) de la cabine, l'échelle étant formée d'un certain nombre de pièces, et étant rétractable dans un compartiment (5 ; 10) agencé dans la partie inférieure du lit, de laquelle elle peut être extraite,
**caractérisés en ce qu'**ils comprennent une base (6) sur la pièce d'extrémité, qui permet à un utilisateur d'enfermer ladite échelle à l'intérieur dudit compartiment (5 ; 10) de façon à contenir complètement l'échelle rétractée une fois fermé.

2. Echelle et lit dans une cabine de conducteur selon la revendication 1, **caractérisés en ce que** ledit nombre de pièces est déterminé par la profondeur du lit, lorsque l'échelle est rétractée, et la distance entre le lit et le sol de la cabine, avec l'échelle ouverte, de sorte que ladite échelle peut reposer au sol (2) de la cabine lorsqu'elle est pleinement ouverte, et peut être rétractée et escamotée sous ledit lit (1) une fois fermée.

3. Echelle et lit dans une cabine de conducteur selon la revendication 1, **caractérisés en ce que** les pièces dudit nombre de pièces sont jointes ensemble au moyen de charnières (8).

4. Echelle et lit dans une cabine de conducteur selon la revendication 1, **caractérisés en ce que** les pièces dudit nombre de pièces sont télescopiques, de façon à coulisser les unes à l'intérieur des autres de façon rétractable.

5. Echelle et lit dans une cabine de conducteur selon la revendication 1, **caractérisés en ce que** ledit compartiment (5) est intégré dans un cadre de matelas (9) du lit, dans une position centrale.

6. Echelle et lit dans une cabine de conducteur selon la revendication 3, **caractérisés en ce que** ledit compartiment (5) fait saillie en dessous de la surface inférieure dudit cadre de support (9).

7. Echelle et lit dans une cabine de conducteur selon la revendication 5, **caractérisés en ce que** ledit compartiment (5) se présente sous la forme d'une coque fermée constituée d'une matière plastique rigide, avec des coins arrondis.

8. Echelle et lit dans une cabine de conducteur selon la revendication 5, **caractérisés en ce que** ladite échelle est articulée à son extrémité supérieure au moyen de charnières coulissantes (7) qui la maintiennent fixée audit lit, lesdites charnières coulissantes (7) étant agencées dans ledit compartiment (5).

9. Echelle et lit dans une cabine de conducteur selon la revendication 1, **caractérisés en ce que** ladite échelle est constituée d'un métal léger, par exemple d'aluminium.

10. Cabine de conducteur, notamment d'un véhicule industriel, équipée d'une échelle et d'un lit selon l'une quelconque des revendications précédentes.
